# EUROPEAN PATENT APPLICATION

(11) **EP 1 754 844 A2**
(43) Date of publication of application: **21.02.2007**
(21) Application number: 06117404.1
(22) Date of filing: 18.07.2006
(51) Int. Cl.: E04F 13/14

(54) **Decorative glass panel for covering walls.**

(30) Priority: 02.08.2005 IT MI20051514
(71) Applicant: Omni Decor S.p.a., 23847 Molteno LC (IT)
(72) Inventor: BRESCIANI, Ferruccio, 22066, MARIANO COMENSE (CO) (IT)
(74) Representative: Mittler, Enrico

(57) **Abstract**

A decorative glass panel for covering walls, doors or the like, is described comprising an internal layer (3) provided with means (7) for its fastening to the wall, and an external decorative layer of glass (4) adhering to said internal layer (3) through an adhesive layer (5).

## Description

The present invention concerns a decorative glass panel for covering walls.

In order to make facades or simple walls of public and private buildings more pleasant it is customary to apply panels of various material to them.

Glass panels are particularly appreciated especially when these are crafted by Italian expert glassmakers. Venice, for example, is known all over the world for the craftmanship of glass, of any type and shape including panels.

Panels of semi-reflecting glass (mirrors) are often used for covering skyscrapers or inside of buildings such as gymns.

In practice however glass panels are very seldom used because they are difficult to fasten to walls, doors or the like.

Currently said panels have a frame or passing-through holes for their fastening. Both solutions thwart in part the pleasantness of said panels which in any case are still very expensive.

The direct glueing of the glass panels to walls, doors or the like is not very safe. In fact in several Countries the direct glueing of glass panels to facades of masonry buildings is not permitted by precise norms of the law.

On the other hand the direct glueing would allow to completely hide fastening means thus increasing the artistic worth of the panel and therefore its economic value on the market.

Scope of the present invention is to provide a glass panel comprising safe fastening means that are not visible from the outside.

According to the invention, such scope is attained with a decorative glass panel for the covering of walls, characterised in that it comprises an internal layer provided with means for its fastening to the wall, and an external layer of decorative glass that is made adhere to said internal layer through an adhesive layer.

The internal layer comprises safe fastening means that are completely hidden by the external layer of decorative glass.

These and other characteristics of the present invention will be made evident by the following detailed description of an embodiment thereof that is described as a non-limitng example in the enclosed drawings, in which:

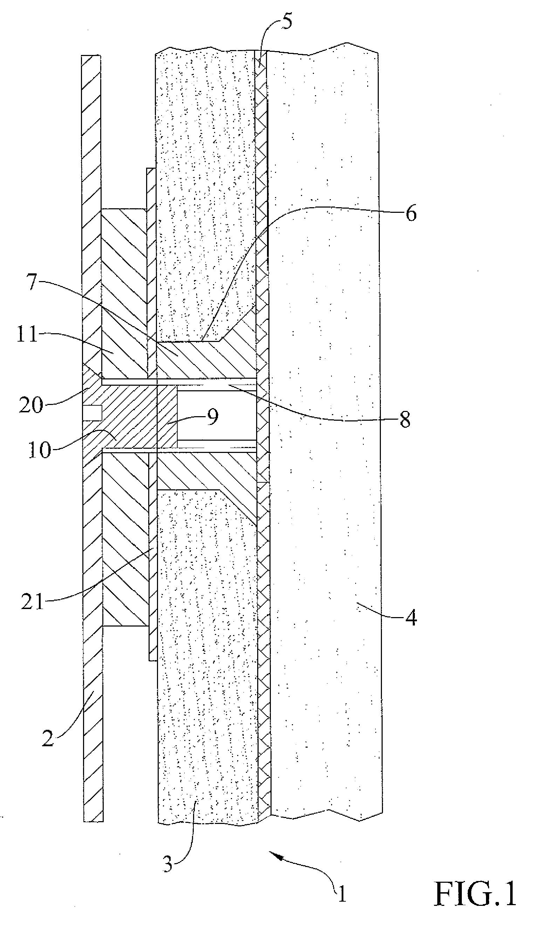

Figure 1 shows a partial sectional view of a panel according to the present invention fastened to a wall;
Figure 2 shows the panel in Figure 1 in "exploded" view.

A glass panel 1 according to the present invention for the covering of a wall comprises an internal layer of glass 3 and an external layer of glass 4 couplable through an adhesive layer 5.

The internal layer 3, which is the one destined to be facing towards the wall to be covered, has a passing hole 6 in which a pierced metallic bushing 7 is housed, in particular made of stainless steel, preferably but not necessarily tapered, with female internal thread 8 couplable with a male threaded element 9 having head 20 engageable with screwing means as screw drivers.

Said male element 9 also engages with an additional female thread 10 present in a fastening plate 11 fastened in turn by the same male element 9 to a frame 2, that is fastenable to the wall to be covered by means of suitable structural elements suitable to allow the access to the head 20 of the male element 9.

A rubber packing 21 is interposed between the glass panel 1 and the fastening plate 11.

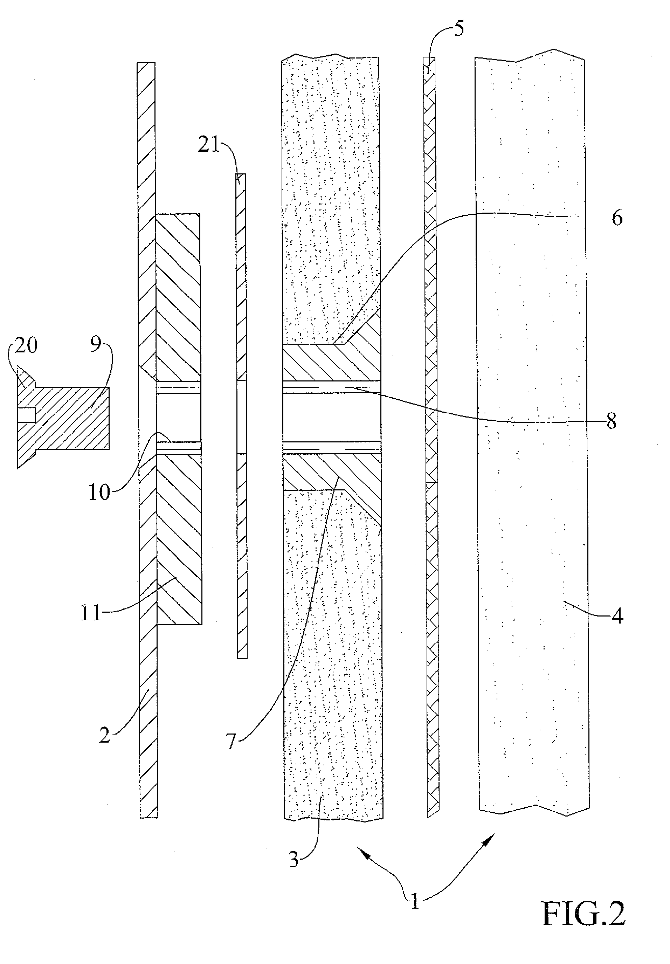

For the assembly (Figure 2) of the panel 1 and its fastening to the wall to be covered, starting from the condition in Figure 2, the joining of the two layers 3 and 4 of the glass panel (the first already with the bushing 7 in the hole 6) is previously provided after the application of the adhesive layer 5, in particular polyvynil butyril (PVB).

The complete panel thus obtained is subsequently fastened to the frame 2, already fastened to the wall to be covered, through the fastening plate 11 with interposed packing 21 and the male threaded element 9.

The fastening bushing 7 therefore remains completely hidden, while guaranteeing at the same time a firm fastening of the glass panel to the wall to be covered.

In the same way it is possible to fasten the panel 1 to doors or the like.

The internal layer 3 may not be of glass but it must however be of a material such as to guarantee a firm glueing of the external layer of decorative glass 4.

## Claims

1. Decorative glass panel for covering walls, doors or the like, **characterised in that** it comprises an internal layer (3) provided with means (7) for its fastening to the wall, and an external layer of decorative glass (4) adhering to said internal layer (3) through an adhesive layer (5).

2. Panel according to claim 1, **characterised in that** said internal layer (3) is made of glass.

3. Panel according to claim 1, **characterised in that** said internal layer (3) comprises a passing-through hole (6) in which a bushing (7) with a female internal thread (8) is housed which is suitable to couple with a male threaded element (9) for the fastening to the wall to be covered.

4. Panel according to claim 3, **characterised in that** said bushing (7) is metallic.

5. Panel according to claim 1, **characterised in that** said adhesive layer (5) is polyvynil butyril or PVB.
